(19) Europäisches Patentamt
European Patent Office
Office européen des brevets

(11) **EP 2 690 822 A2**

## (12) EUROPEAN PATENT APPLICATION

(43) Date of publication:
**29.01.2014 Bulletin 2014/05**

(51) Int Cl.:
**H04L 12/26** (2006.01)     **H04L 29/06** (2006.01)

(21) Application number: **13176701.4**

(22) Date of filing: **16.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.07.2012 GB 201213436**

(71) Applicant: **Thales Holdings UK Plc**
**Addlestone Surrey KT15 2NX (GB)**

(72) Inventors:
• **Craddock, Rachel**
 **Nr Weybridge, Surrey KT15 2NX (GB)**
• **Harvey, David**
 **Nr Weybridge, Surrey KT15 2NX (GB)**
• **Hood, Andrew**
 **Nr Weybridge, Surrey KT15 2NX (GB)**

(74) Representative: **Round, Edward Mark et al**
**Marks & Clerk LLP**
**90 Long Acre**
**London**
**WC2E 9RA (GB)**

(54) **Device and method for detection of anomalous behaviour in computer network activity**

(57)     A sequence of data representing network behaviour is analysed using the technique of delay space embedding. This causes a sequence of tuples to be constructed from the data sequence. This sequence of tuples can then be represented in a multi-dimensional representation space, which allows detection of network behaviour divergent from a norm by a human operator. In particular, the data representing network behaviour may be the inter-packet arrival time.

FIGURE 2

Printed by Jouve, 75001 PARIS (FR)

## Description

FIELD

Embodiments described herein relate to the detection of anomalous behaviour in computer networking, particularly, but not exclusively, to the detection of computer network attacks.

BACKGROUND

Computer networks are used in support of a wide range of commercial and governmental functions, to the extent that they can now be considered ubiquitous. Moreover, most organisations now rely almost wholly on the reliable operation of their computer networks, and essentially would be paralysed should such networks fail.

Further, computer networks are used to organise, store and provide access to extensive quantities of data. Such data may be of a commercially sensitive nature, or of a personal nature. This means that it is imperative that such data be retained in a manner such that only authorised users or processes have access to such data.

For these reasons, it is evident that some people might be motivated to attack a computer network, either to gain access to data without authority, or to negatively affect the proper function of the computer network. In either case, the primary motive might be financial gain or to cause adverse consequences for the operator of the computer network. It might also be that the attacker may gain non-financial benefit from obtaining information without authority, or from disrupting the proper operation of the computer network. In any event, network attacks are potentially damaging to computer network integrity.

Recent examples of computer network attacks have become increasingly complex and sophisticated. Many techniques have been developed to counter computer network attacks. There is an ongoing need to improve defences against computer network attacks, as new forms of attack come to light.

Determining the presence of a computer network attack can involve detection and analysis of large amounts of traffic data. This action requires both rapid detection of all anomalies and also the ability to identify those that have not been seen before.

New attacks are potentially damaging in that detection of the attack depends, to some extent, on recognition of the existence of the vulnerability - also, determining a defence to the attack also depends on identifying the vulnerability and establishing how the vulnerability can be resolved. These steps can take time, and meanwhile the attack could be carrying out significant damage to the attacked network, or the network might have to be disabled for a period of time - both potentially costly events.

The detection of such attacks generally relies on an attack signature being known to protection software. If the signature of a particular type of attack is not known then, on this basis, the attack will not be detected.

SUMMARY OF INVENTION

An aspect of the invention provides a computer apparatus for processing computer network activity information, the computer network activity information comprising a sequence of data, the computer apparatus comprising data processing means operable to map the sequence of data into a sequence of data tuples, and to organise the tuples into a representation space, from which patterns in the data can be determined.

The data processing means may be operable to map a data element and one or more of its immediate successors in the sequence to a corresponding data tuple. The representation space may be two-dimensional, or of higher dimension, depending on the embedding dimension.

The data processing means may be operable to map a data element and two immediate successors thereof in the sequence to a corresponding data tuple. The representation space may be three dimensional.

Display means may be provided, operable to display, to a user, a visual display representing the representation space with the tuples plotted within the representation space.

Aspects may be provided by way of a computer program product, which may comprise data defining computer executable instructions which, when implemented on a computer, cause the computer to become configured to implement the invention.

DESCRIPTION OF DRAWINGS

Figure 1 is a graph illustrating a typical data sequence to demonstrate an embodiment described herein;

Figure 2 is a three dimensional graph showing processed data derived from the data sequence illustrated in figure 1;

Figure 3 is a schematic diagram of a network in accordance with an embodiment described herein; and

Figure 4 is a schematic diagram of a node computer of the network illustrated in figure 3.

DESCRIPTION OF SPECIFIC EMBODIMENTS

In general terms, embodiments presented herein provide a so-called Delay Space Embedding (DSE) technique, which determines inter-packet arrival times of computer network packets, and uses these arrival times to construct a graphical display from which a user can deduce the presence of network behaviour commensurate with a network attack.

Accordingly, such embodiments process information and construct a particular format for presentation of that information, to attune to the ability of experienced users to interpret patterns and to identify anomalous output. This takes account of the fact that it may not be possible to identify, before an attack has happened, what impact the attack will have on network behaviour. Thus, given this unpredictability, it is useful to involve a human operator to determine whether a change in behaviour is anomalous, or merely part of the normal operation of the network. Embodiments such as described herein provide tools to enable a user to interpret network data in a manner hitherto not possible, given the quantity of data involved, its complexity, and the need for immediate, or near immediate, recognition of the existence of a potential problem.

Therefore, embodiments described herein comprise a mapping of network traffic data to a delay space, resulting in information which can be displayed as a chart with geometric characteristics suitable for the discernment, by a human operator, of anomalies, changes or other phenomena which may point to the existence of an attack or threat.

By way of overview, Delay Space Embedding (DSE) is a technique arising from chaos theory, and can be used in the analysis of non-linear time series. It provides a way of reconstructing the phase space of a system from the observation of just one of the state variables.

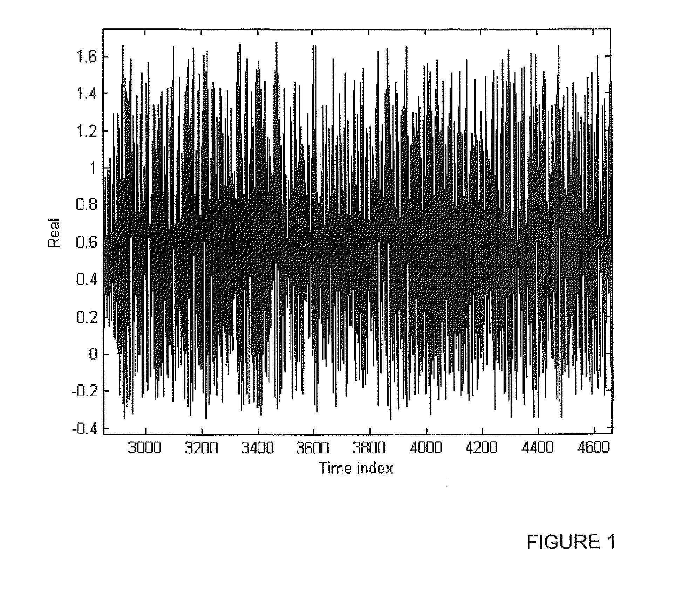

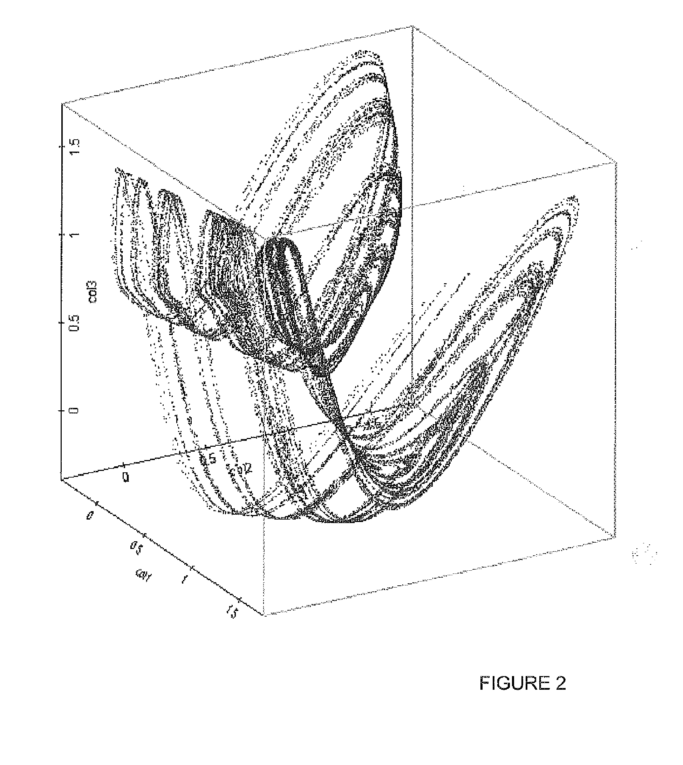

For example, figure 1 shows a time series produced from the real part of the complex result of the Ikeda Map described in "Multiple-valued Stationary State and its Instability of the Transmitted Light by a Ring Cavity System" (K. Ikeda, Optical Communications Volume 30, Issue 2, pages 257-261, 1979). A three dimensional phase space representation of this, produced using Delay Space Embedding with an embedding dimension of 3 and a time delay of 1, is shown in Figure 2. The structure of the time series can be more clearly seen in the Delay Space Embedding profile than in the one-dimensional graph.

A specific embodiment will now be described which applies DSE to inter-packet arrival times. In this embodiment, a particular computer in a network is configured to process information concerning the behaviour of the network, to map the information in a way which enables patterns in the information to be identified, and to determine norms in the patterns of information. Any divergence of the behaviour of the network from the determined norms can be considered anomalous, and can be made the subject of further investigation.

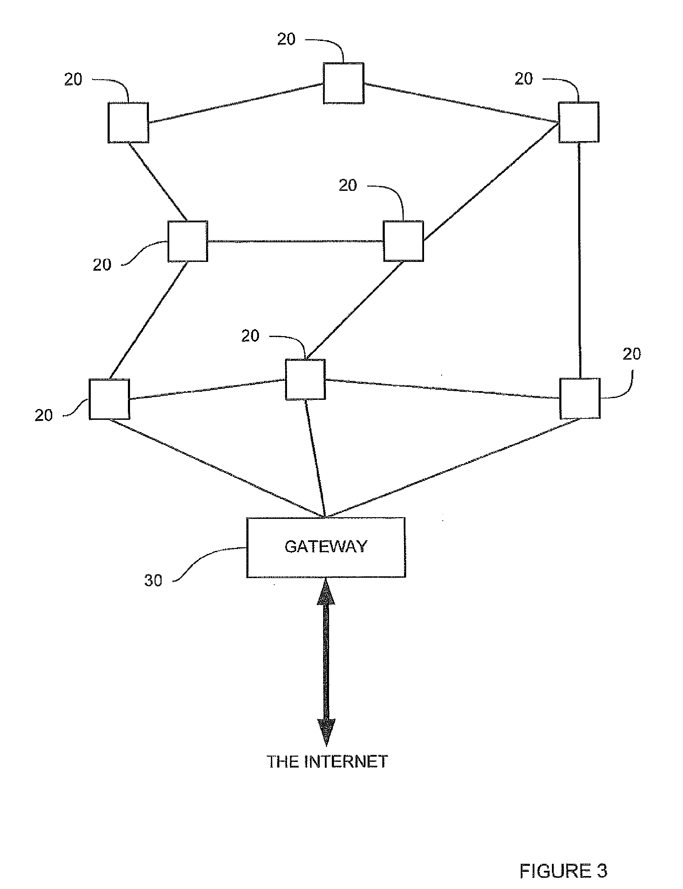

Figure 3 illustrates a computer network 10 operating in a specific enterprise environment. The term "enterprise environment" is intended to encompass not only business oriented enterprises, but also other user environments such as government functions, health care providers, private domestic residences and so on. In general, therefore, the computer network 10 can be thought of as any computer network where a computer network oversight responsibility may exist, whether this be a single IT manager or a team of people each allocated specific tasks related to all or part of the network.

The computer network 10 comprises a plurality of node computers 20, each of which has processing and communications capability enabling the establishment and operation of the network 10. In this embodiment, no centralised "network control" function is illustrated, as such is distributed throughout the network. However, in an alternative approach, such as a hub-and-spoke arrangement, it might be envisaged that a single network controller function could be provided.

A gateway device 30 provides access to other networks, such as those accessible by the generally recognised functionalities known as "the Internet". The term "the Internet" will be understood by the reader to encompass all or part of the established global network-of-networks by which a computer may retrieve information from another computer using protocols such as FTP and TCP/IP. It will be understood that the specific embodiment is only exemplary, and that the performance of aspects of the invention does not rely on the provision of internet access. A standalone network could also make use of an embodiment of the invention.

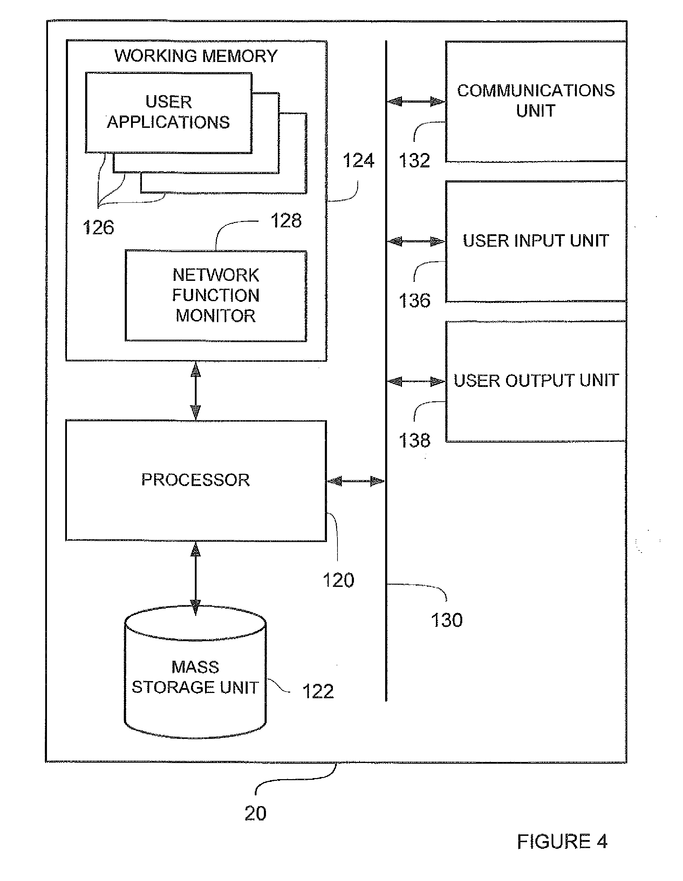

One of the node computers 20 is illustrated in further detail in figure 4. As shown in figure 4, the particular computer 20 comprises a processor 120, which is in communication with a mass storage unit 122. The processor 120 is also in communication with a working memory 124. As illustrated, and for ease of comprehension, the working memory 124 is shown storing instances of user applications 126 and a network function monitor 128. While, at any point in time, the working memory 124 will, indeed, store portions of program code which, when executed by the processor 120, will cause the computer, as a whole, to implement user applications 126 and network function monitor 128, the reader will appreciate that, for the convenient and efficient running of the computer, program code portions may well be held in the mass storage unit 122, along with virtual memory implemented therein.

Also in communication with the processor 120, via a bus 130, are a user input unit 136, for receiving signals from user actuated input devices such as a keyboard or mouse, and a user output unit 138, for sending, such as to a visual display unit (not illustrated), output signals to cause a display to be generated for viewing by a user. A communications unit 132 implements communication within the network 10.

The implementation of the network function monitor 128, as a functionality provided within the computer by way of execution of a computer program, will now be described. The network function monitor 128 can therefore be considered a discrete processing unit within the computer 20, and will be described as such hereafter.

The network function monitor 128 acts on a one dimensional data sequence T which is provided to the computer 20. The one dimensional data sequence comprises a list of reports sent to the computer 20 representing inter-packet time intervals for communications within the network 10. More specifically, in this embodiment the reports are generated from monitoring a particular communications link in the network, to determine inter-packet time intervals for any communication, between any two nodes in the network, using that link. To that end, the reader will appreciate that the inter-packet intervals so collected will be representative of the behaviour of a range of node to node communications, and not just those involving the host computer.

The sequence is processed by the network function monitor 128, to render three series of data. The three series are denoted, for convenience, X , Y and Z where:

$$X_n = T_n$$

$$Y_n = T_{n+1}$$

$$Z_n = T_{n+2}$$

In this particular embodiment, a delay of 1 is invoked. It will be appreciated by the reader, that other delay values might be used in other embodiments.

The number of series resultant from DSE is known as the "embedding dimension". Thus, in this embodiment, the embedding dimension is 3.

Further, the time interval from one data series to another, i.e. the time shift imposed on the input stream to create further series is, in this case, 1. That is not to suggest that other time intervals could not otherwise be used.

Table 1 illustrates an exemplary set of data for T:

**Table 1**

| T |
| --- |
| 0.4193716000 |
| 0.7008342000 |
| 0.6579652000 |
| 0.1023816000 |
| 0.8697311000 |
| 0.2626389000 |
| 1.2878032000 |
| 0.9179987000 |
| 0.0385915040 |
| 0.6840116000 |

(continued)

| T |
| --- |
| 0.9385896000 |

This is converted, by the network function monitor 128, to the data set out in table 2:

**Table 2**

| X | Y | Z |
| --- | --- | --- |
| 0.4193716000 | 0.7008342000 | 0.6579652000 |
| 0.7008342000 | 0.6579652000 | 0.1023816000 |
| 0.6579652000 | 0.1023816000 | 0.8697311000 |
| 0.1023816000 | 0.8697311000 | 0.2626389000 |
| 0.8697311000 | 0.2626389000 | 1.2878032000 |
| 0.2626389000 | 1.2878032000 | 0.9179987000 |
| 1.2878032000 | 0.9179987000 | 0.0385915040 |
| 0.9179987000 | 0.0385915040 | 0.6840116000 |
| 0.0385915040 | 0.6840116000 | 0.9385896000 |
| 0.6840116000 | 0.9385896000 | |
| 0.9385896000 | | |

Clearly, the last two rows in table 2 would either be discarded as incomplete, or completed by subsequent data from sequence T.

Each data triple ($X_i$, $Y_i$, $Z_i$) is then plotted on a three-dimensional graph, similar to that illustrated in figure 2. This gives rise to a visual display output for viewing by a user.

The data presented above may be considered by the reader to be seemingly random. However, as the data is generated from the operation of a system, the data is highly unlikely to be truly Gaussian. As such, a pattern may be embedded in the data, which may become discernible through DSE and graphical representation of resultant tuples. This pattern creates, in the mind of the observer, a locus of likely behaviour of the system - changes in the behaviour which cause the creation of tuples which diverge from this locus will be discernible as variation in the pattern displayed. Thus, for example, with reference to Figure 2, the tuples generated in that case plot a clear (albeit relatively complicated) looping pattern, in three dimensions. Divergence from that pattern will be discernible by an observer.

In this embodiment, the embedding dimension is set to 3, so that the resultant DSE profiles are easy to visualise by an human. It has been established by experimentation that a time interval of 1 has been shown to produce good visualisations for computer network data. However, this is not to say that other integral values might not be used as an alternative.

The technique reveals underlying structure in network traffic that is not discernible using conventional techniques and produces in a three-dimensional visualisation that allows an operator to distinguish between normal and anomalous network activity.

In an alternative embodiment, an embedding dimension of 2 may be used. This would give rise to 2-tuples, which would then be plotted on a 2 dimensional graph for pattern recognition by a user.

When using the DSE technique to visualise changes in network traffic profiles, an operator needs to be able to detect the patterns of behaviour. Network traffic, when viewed at the packet level can consist of bursts of tightly clustered short packets, periods of comparative inactivity, as well as less rapidly transmitted larger packets. This leads to a variety of different characteristic patterns in the 3-dimensional DSE profile at different levels of 'zoom'.

If the packet data within a given dataset covers a dense period of network traffic, then all of the data coordinates resulting from those packets will be tightly clustered about the origin of the plot. This will obscure any patterns in that data until the operator selects a suitable zoom level. The operator may also animate the DSE profile, so that the tool shows the profile as it develops over time. This allows the operator to determine when and how the profile pattern changes and hence when and how the network behaviour changes.

It is important that an operator is able to characterise the 'normal' DSE pattern profile for the network under observation and the expected changes in that profile, for them to be able to make quick judgements to recognise anomalies. Characterising the anomalies as 'attacks' requires some experience and understanding of the packet data in relationship to the network under observation.

The embodiment presented herein uses the DSE technique to expose changes in network behaviour. These changes are typically difficult to detect and difficult to distinguish from each other when viewed as one dimensional time series. The DSE profiles produced from inter-packet arrival times of network packets show human-distinguishable changes as the network activity changes.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A computer apparatus for processing computer network activity information, the computer network activity information comprising a sequence of data, the computer apparatus comprising data processing means operable to map the sequence of data into a sequence of data tuples, and to organise the tuples into a representation space, from which patterns in the data can be determined.

2. A computer apparatus in accordance with claim 1 wherein the data processing means is operable to map a data element and its immediate successor in the sequence to a corresponding data tuple.

3. A computer apparatus in accordance with claim 2 wherein the representation space is two-dimensional.

4. A computer apparatus in accordance with claim 1 wherein the data processing means is operable to map a data element and two immediate successors thereof in the sequence to a corresponding data tuple.

5. A computer apparatus in accordance with claim 3 wherein the representation space is three dimensional.

6. A computer apparatus in accordance with any preceding claim and comprising display means operable to display, to a user, a visual display representing the representation space with the tuples plotted within the representation space.

7. A method of processing computer network activity information, the computer network activity information comprising a sequence of data, the method comprising mapping the sequence of data into a sequence of data tuples, and organising the tuples into a representation space, from which patterns in the data can be determined.

8. A method in accordance with claim 7 wherein the mapping comprises mapping a data element and its immediate successor in the sequence to a corresponding data tuple.

9. A method in accordance with claim 8 wherein the representation space is two-dimensional.

10. A method in accordance with claim 7 wherein the mapping comprises mapping a data element and two immediate successors thereof in the sequence to a corresponding data tuple.

11. A method in accordance with claim 10 wherein the representation space is three dimensional.

12. A method in accordance with any one of claims 7 to 11 and comprising displaying, to a user, a visual display representing the representation space with the tuples plotted within the representation space.

13. A computer program product comprising computer executable instructions which, when executed by a computer, cause the computer to perform the method of any one of claims 7 to 12.

FIGURE 1

FIGURE 2

8

FIGURE 3

WORKING MEMORY

USER
APPLICATIONS

126

128

NETWORK
FUNCTION
MONITOR

124

COMMUNICATIONS
UNIT

132

USER INPUT UNIT

136

USER OUTPUT UNIT

138

PROCESSOR

120

130

MASS
STORAGE UNIT

122

20

FIGURE 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. IKEDA.** Multiple-valued Stationary State and its Instability of the Transmitted Light by a Ring Cavity System. *Optical Communications,* 1979, vol. 30 (2), 257-261